# EUROPEAN PATENT APPLICATION

(11) **EP 4 071 505 A2**
(43) Date of publication of application: **12.10.2022**
(21) Application number: 22166480.8
(22) Date of filing: 04.04.2022
(51) Int. Cl.: G01S 7/481, G01S 17/42, G01S 17/931

(54) **PLATE MIRROR SCANNING LIDAR WITH MULTIPLE FIELDS OF VIEW**

(30) Priority: 05.04.2021 KR 20210043985
(71) Applicant: Spintek, Gwangju 61011 (KR)
(72) Inventor: CHOI, Hyun Yong, 62253 Gwangju (KR)
(74) Representative: Treeby, Philip David William

(57) **Abstract**

The present invention relates to a plate mirror scanning lidar with multiple fields of view, which may include a plate rotating mirror of which both surfaces are reflective surfaces and rotating about the rotation axis of the center, a first light transmitting/receiving module and a second light transmitting/receiving module which are located to face each other at positions symmetrical about a rotation axis of the rotating mirror and respectively comprise a light source unit and a receiver to output laser light and receive reflected light, and a signal processing unit for receiving the scan results of the first light transmitting/receiving module and the second light transmitting/receiving module to process the scan results for each channel in a scan direction.

## Description

### CROSS-REFERENCE TO RELATED APPLICATION

This application claims priority to and the benefit of Korean Patent Application No. 10-2021-0043985, filed on April 5, 2021, the disclosure of which is incorporated herein by reference in its entirety.

### [Technical Field]

The present invention relates to a plate mirror scanning lidar with multiple fields of view, and more specifically to the structure of a plate mirror scanning lidar which is capable of structurally increasing the resolution.

### [Background Art]

Recently, as a basic technology for safety specifications and autonomous driving of automobiles, the lidar is a device for detecting the distance to an object using a laser.

The lidar may be applied to various fields such as intelligent moving robots, drones and the like as well as automobiles, and thus, various researches are being conducted.

The lidar includes a scanner for expanding an irradiation area while continuously changing the movement path of laser light by emitting the laser light of a laser light source device. The scanner includes a mirror.

For the mirror, a flat mirror or a multi-sided mirror may be used as necessary.

Korean Registered Patent No. 10-2009025 (LIDAR DEVICE AND NODDING MIRROR USED IN LIDAR DEVICE, registered on August 2, 2019) discloses a device capable of expanding the scan area using a rotating multi-sided mirror.

As such, an optical system including the mirror plays a very important role in determining the scan area of the lidar and adjusting the range of the lidar.

However, the scanning lidar using the conventional mirror has been limited to the extent of expanding the scan area by changing the movement direction of a laser by using the structure of a mirror and the arrangement of a laser light source device as in the aforementioned registered patent.

Accordingly, there is a demand for a lidar which is capable of performing various functions such as scanning both the front side and the rear side by using one lidar or adjusting the resolution as necessary.

### [Disclosure]

### [Technical Problem]

The problem to be solved by the present invention, which has been devised in consideration of the aforementioned problems, is directed to providing a plate mirror scanning lidar with multiple fields of view that can scan the front side and rear side with one lidar.

Another problem to be solved by the present invention is directed to providing a plate mirror scanning lidar with multiple fields of view that can scan the front side and rear side with one lidar and adjust the resolution.

### [Technical Solution]

In order to solve the aforementioned technical problems, the plate mirror scanning lidar with multiple fields of view according to the present invention may include a plate rotating mirror of which both surfaces are reflective surfaces and rotating about the rotation axis of the center, a first light transmitting/receiving module and a second light transmitting/receiving module which are located to face each other at positions symmetrical about a rotation axis of the rotating mirror and respectively comprise a light source unit and a receiver to output laser light and receive reflected light, and a signal processing unit for receiving the scan results of the first light transmitting/receiving module and the second light transmitting/receiving module to process the scan results for each channel in a scan direction.

In an exemplary embodiment of the present invention, the first light transmitting/receiving module and the second light transmitting/receiving module may each have different outputs or different wavelengths.

In an exemplary embodiment of the present invention, the plate mirror scanning lidar may further include a control unit for detecting the distance of an object by receiving the scan results for each channel processed by the signal processing unit.

In an exemplary embodiment of the present invention, the plate mirror scanning lidar may further include a first moving part and a second moving part that linearly move the first light transmitting/receiving module and the second light transmitting/receiving module between the channels in a direction parallel to an imaginary straight line centered on the rotation axis under the control of the control unit, wherein horizontal resolution may be improved by placing a second scan pattern formed by the second light transmitting/receiving module between first scan patterns formed by the first light transmitting/receiving module.

In an exemplary embodiment of the present invention, the plate mirror scanning lidar may further include a first moving part and a second moving part that linearly move the first light transmitting/receiving module and the second light transmitting/receiving module between the channels in a direction parallel to an imaginary straight line centered on the rotation axis under the control of the control unit, wherein horizontal resolution and vertical resolution may be improved by placing a second scan pattern formed by the second light transmitting/receiving module between first scan patterns formed by the first light transmitting/receiving module, and also by differentiating the height of the first scan pattern and the height of the second scan pattern.

In an exemplary embodiment of the present invention, the plate mirror scanning lidar may further include a first rotation part and a second rotation part for changing the optical axis directions of the first light transmitting/receiving module and the second light transmitting/receiving module moved by the first moving part and the second moving part, respectively, to adjust the scan range.

In an exemplary embodiment of the present invention, the channel may consist of a first channel and a second channel, wherein a first scan pattern formed by the first light transmitting/receiving module and a second scan pattern formed by the second light transmitting/receiving module may be alternately repeated continuously in the first channel, and wherein the second scan pattern and the first scan pattern may be alternately repeated continuously in the second channel.

In an exemplary embodiment of the present invention, the control unit may control the operational timing of the first light transmitting/receiving module and the second transmitting/receiving module such that a second scan pattern formed by the second light transmitting/receiving module is located between first scan patterns formed by the first light transmitting/receiving module.

### [Advantageous Effects]

The present invention has an effect of locating light transmitting/receiving module respectively including a light source unit and a sensor unit at symmetric positions with respect to the rotation axis of one rotating mirror, and simultaneously scanning two opposite directions by using both surfaces of the rotating mirror as reflective surfaces.

In addition, the present invention has an effect of diversifying the scan information acquisition method by using a pair of light transmitting/receiving modules to scan two mutually opposite directions and by differentiate the outputs and laser wavelengths of the two light transmitting/receiving modules.

Moreover, the present invention has an effect of adjusting the scan range by controlling the positions of a pair of light transmitting/receiving modules.

### [Description of Drawings]

FIG. 1 is a block configuration diagram of the plate mirror scanning lidar with multiple fields of view according to a preferred exemplary embodiment of the present invention.
FIGS. 2 and 3 are exemplary diagrams of scan patterns obtained by the operation of the present invention, respectively.
FIG. 4 is an exemplary diagram of an A channel and a B channel.
FIG. 5 is a configuration diagram of the plate mirror scanning lidar with multiple fields of view according to another exemplary embodiment of the present invention.
FIG. 6 is a change diagram of scan patterns according to the variation of a first transmitting/receiving light module and a second transmitting/receiving light module.
FIGS. 7 and 8 are overlapping exemplary diagrams of scan patterns according to the present invention, respectively.
FIG. 9 is a partial configuration diagram of the plate mirror scanning lidar with multiple fields of view according to still another exemplary embodiment of the present invention.
FIGS. 10 and 11 are exemplary diagrams for describing the application of the present invention, respectively.

### [Modes of the Invention]

In order to fully understand the configurations and effects of the present invention, preferred exemplary embodiments of the present invention will be described with reference to the accompanying drawings. However, the present invention is not limited to the exemplary embodiments disclosed below and may be embodied in various forms, and various modifications may be made. However, the description of the present exemplary embodiment is provided so that the disclosure of the present invention is complete, and to fully inform the scope of the invention to those of ordinary skill in the art to which the present invention pertains. In the accompanying drawings, components are enlarged in size from reality for the convenience of description, and ratios of each component may be exaggerated or reduced.

Terms such as 'first' and 'second' may be used to describe various components, but the components should not be limited by the above terms. The above terms may be used only for the purpose of distinguishing one component from another. For example, without departing from the scope of the present invention, a 'first component' may be termed a 'second component', and similarly, a 'second component' may also be termed a 'first component'. In addition, the singular expression includes the plural expression unless the context clearly dictates otherwise. Unless otherwise defined, terms used in the exemplary embodiments of the present invention may be interpreted as meanings commonly known to those of ordinary skill in the art.

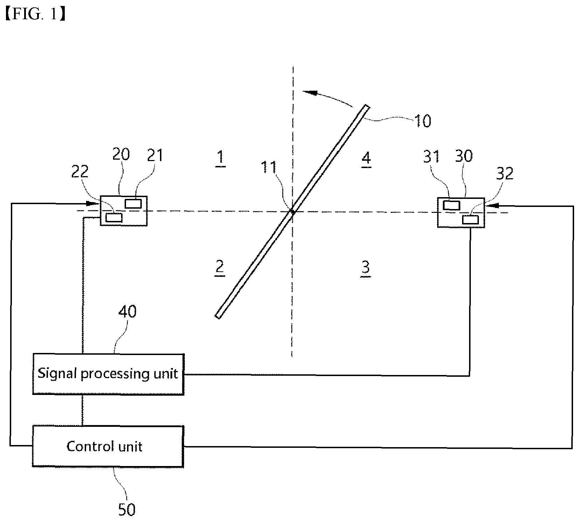

FIG. 1 is a block configuration diagram of the plate mirror scanning lidar with multiple fields of view according to a preferred exemplary embodiment of the present invention.

Referring to FIG. 1, the present invention includes a rotating mirror 10 of which both surfaces are reflective surfaces and rotating in a clockwise direction or counterclockwise direction with respect to a rotating shaft 11, a first light transmitting/receiving module 20 and a second light transmitting/receiving module 30 which are located to be symmetrical with respect to the rotating shaft 11 to face the rotating mirror 10, a signal processing unit 40 for receiving the scan results of the first light transmitting/receiving module 20 and the second light transmitting/receiving module 30 to perform merging for each signal channel, and a control unit 50 for determining whether an object is detected and a distance by using the processing result of the signal processing unit 40.

Hereinafter, the configuration and operation of the plate mirror scanning lidar with multiple fields of view according to a preferred exemplary embodiment of the present invention configured as described above will be described in detail.

First, the first light transmitting/receiving module 20 and the second light transmitting/receiving module 30 respectively include light source units 21, 31 for outputting laser light and receivers 22, 32 for receiving the reflected light of the laser light transmitted through the rotating mirror 10.

The optical axes of the light sources 21, 31 are directed toward the rotating shaft 11 which is the center of the rotating mirror 10.

Preferably, the first light transmitting/receiving module 20 and the second light transmitting/receiving module 30 may be respectively located at symmetrical positions with respect to the rotating shaft 11. This limitation of the positions is for the purpose of the description of the present invention, and examples of positions other than symmetrical positions may be included in the following exemplary embodiments.

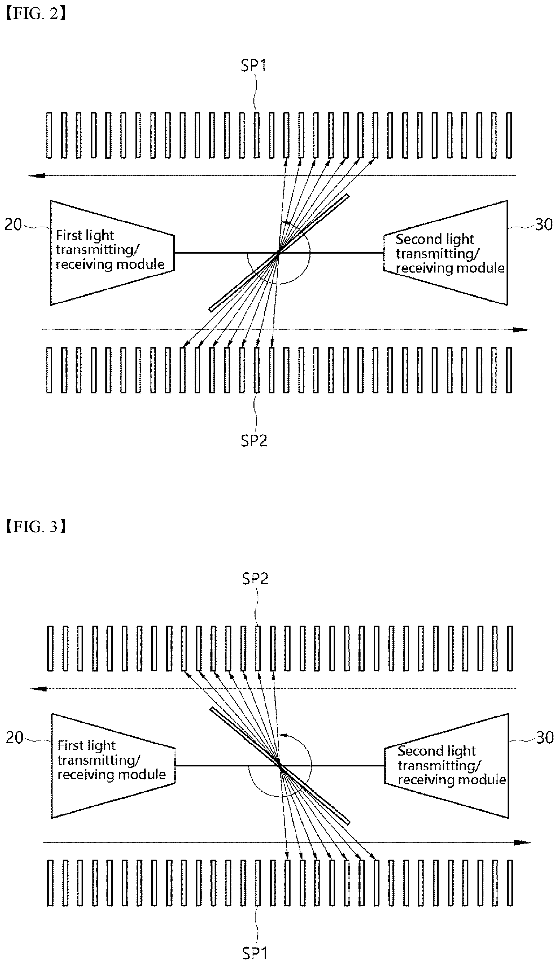

FIGS. 2 and 3 illustrate scan patterns obtained by the operation of the present invention, respectively.

The first scan pattern (SP1) is a scan pattern of the first light transmitting/receiving module 20, and the second scan pattern (SP2) is a scan pattern of the second light transmitting/receiving module 30.

Referring to FIG. 2, the laser light output from the first light transmitting/receiving module 20 is reflected toward the front side, and the laser light output from the second transmitting/receiving module 30 is reflected toward the rear side.

In this case, the concept of front and rear is for the convenience of explanation, and these are defined as expressing that the first scan pattern (SP1) by the first light transmitting/receiving module 20 and the second scan pattern (SP2) by the second light transmitting/receiving module 30 are located in regions opposite to each other with respect to the rotating mirror 10, the first light transmitting/receiving module 20 and the second light transmitting/receiving module 30 as the center.

Further, in terms of signal processing, the front side may be expressed as an A channel and the rear side may be expressed as a B channel.

Referring back to FIG. 1, the rotating mirror 10 may obtain four quadrants divided by the vertical and horizontal lines in consideration of imaginary vertical and horizontal lines centered on the rotating shaft 11.

In this case, the horizontal line may coincide with the optical axes of the first light transmitting/receiving module 20 and the second light transmitting/receiving module 30.

It is described by assuming that the upper left surface is the first quadrant (1), the lower left surface is the second quadrant (2), the lower right surface is the third quadrant (3), and the upper right surface is the quadrant (4).

When the rotating mirror 10 is located in the second and fourth quadrants, the first scan pattern (SP1) by the first light transmitting/receiving module 20 is formed on the front side, and in contrast, the second scan pattern (SP2) by the second light transmitting/receiving module 30 is formed on the rear side, and the scan shape in this case is illustrated in FIG. 2.

As shown in FIG. 3, when the rotating mirror 10 rotates counterclockwise or clockwise and is located in the first and third quadrants (1) and (3), the first scan pattern (SP1) by the first light transmitting/receiving module 20 is formed on the rear side, and on the contrary, the first scan pattern (SP1) by the second light transmitting/receiving module 30 is formed on the front side.

Accordingly, the present invention may continuously scan the front side and rear side.

As such, the information of the reflected light received by the receivers 22, 32 of the first light transmitting/receiving module 20 and the second light transmitting/receiving module 30 is provided to the signal processing unit 40, and the signal processing unit 40 performs a process of dividing and merging the scan information received from the first light transmitting/receiving module 20 and the second light transmitting/receiving module 30.

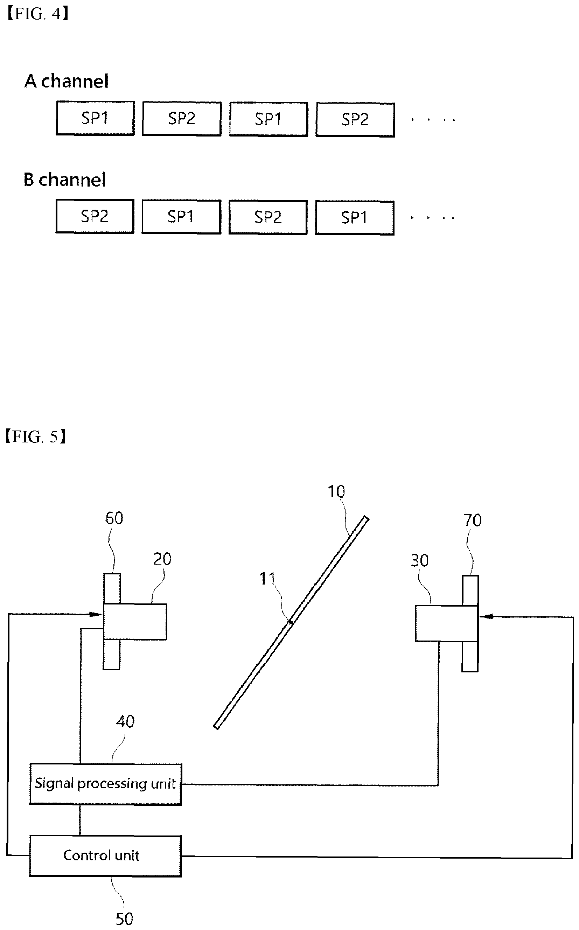

FIG. 4 is an exemplary diagram of an A channel which is the front side and a B channel which is the rear side.

As described above, the scan areas of the first light transmitting/receiving module 20 and the second light transmitting/receiving module 30 change according to the position of the rotating mirror 10, and in order to substantially use the scan results, the scan results in the same direction should be combined and processed.

Accordingly, the signal processing unit 40 processes by extracting and rearranging the scan pattern constituting the A channel, which is the front side, and the scan pattern constituting the B channel, which is the rear side, from the scan results of the first light transmitting/receiving module 20 and the second light transmitting/receiving module 30.

Specifically, the first scan pattern (SP1) and the second scan pattern (SP2) are continuously and alternately repeated in the A channel, and the second scan pattern (SP2) and the first scan pattern (SP1) are continuously and alternately repeated in the A channel.

As such, the present invention may scan opposite reflections while using one rotating mirror.

FIG. 5 is a block configuration diagram of the plate mirror scanning lidar with multiple fields of view according to another exemplary embodiment of the present invention.

Referring to FIG. 5, the present invention further includes a first moving part 60 and a second moving part 70 for changing the positions of the first light transmitting/receiving module 20 and the second light transmitting/receiving module 30, in addition to the example of FIG. 1 described above.

The first moving part 60 and the second moving part 70 are mechanical structures that can linearly move the positions of the first light transmitting/receiving module 20 and the second light transmitting/receiving module 30 under the control of the control unit 50, respectively.

For example, the first light transmitting/receiving module 20 and the second light transmitting/receiving module 30 may be rail structures that may move by a step motor capable of fine adjustment, respectively.

The moving directions of the first light transmitting/receiving module 20 and the second light transmitting/receiving module 30 moving by the first moving part 60 and the second moving part 70 are directions parallel to an imaginary straight line passing through the rotating shaft 11 at the initial position of the first light transmitting/receiving module 20 and the second light transmitting/receiving module 30 of FIG. 1, and the first light transmitting/receiving module 20 and the second light transmitting/receiving module 30 at the initial positions are located symmetrically with respect to the imaginary straight line.

Specifically, it moves in a direction parallel to an imaginary straight line connecting the front side and the rear side.

As described above, changes in the positions of the first light transmitting/receiving module 20 and the second light transmitting/receiving module 30 result in changes in each scan pattern.

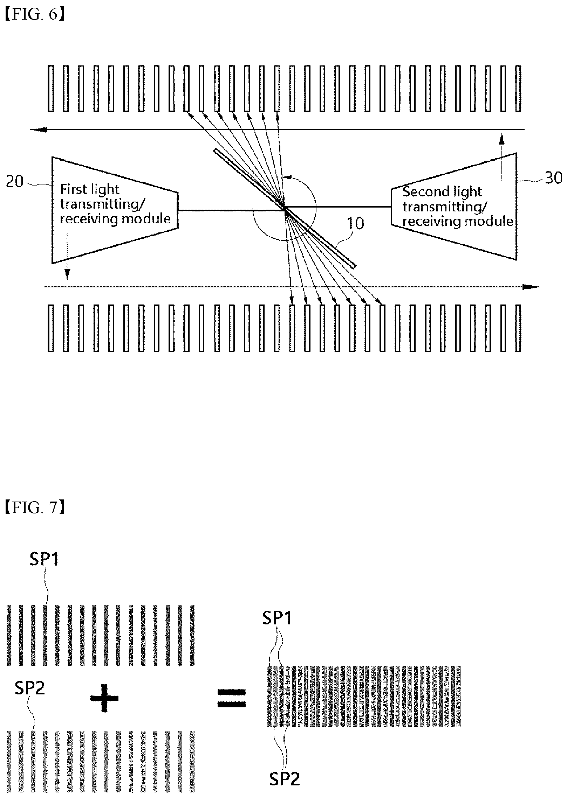

FIG. 6 illustrates changes in scan patterns according to the variation of a first transmitting/receiving light module and a second transmitting/receiving light module.

As illustrated in FIG. 6, when the first light transmitting/receiving module 20 is moved to the rear side and the second light transmitting/receiving module 30 is moved to the front side, the optical axis of the first light transmitting/receiving module 20 moves to the lower side of the rotating shaft 11, and the optical axis of the second light transmitting/receiving module 30 moves to the upper side of the rotating shaft 11.

Accordingly, the laser incident positions of the first light transmitting/receiving module 20 and the second light transmitting/receiving module 30 with respect to the rotating mirror 10 are changed.

According to this position change, the horizontal resolution of the second light transmitting/receiving module 30 may be positioned between the horizontal resolutions of the first light transmitting/receiving module 20.

That is, by controlling the positions such that the first scan pattern (SP1) and the second scan pattern (SP2) are displaced, scan results in which the resolution is improved by two folds may be obtained.

As described above, the first scan pattern (SP1) and the second scan pattern (SP2) are alternately repeated continuously in the A channel, and in this case, the signal processing unit 40 may expand the horizontal resolution by overlapping the first scan pattern (SP1) of the A channel and the subsequent second scan pattern (SP2).

An example in which the first scan pattern (SP1) and the second scan pattern (SP2) are overlapped is illustrated in FIG. 7.

That is, it is possible to improve the resolution by two folds by reducing the width of the scan line of a scan.

It is possible to improve the resolution by a method other than controlling the position, and it may create a scan pattern in which the first scan pattern (SP1) and the second scan pattern (SP2) are overlapped as illustrated in FIG. 7 by controlling the second light transmitting/receiving module 30 to start radiating at a time corresponding to half of the horizontal resolution of the first light transmitting/receiving module 20 by the control unit 50.

However, this method may be relatively difficult to control compared to the position control method.

The first light transmitting/receiving module 20 and the second light transmitting/receiving module 30 may respectively transmit lasers having different outputs and wavelengths. For example, the first light transmitting/receiving module 20 may use a laser having a wavelength of 905 nm, and the second light transmitting/receiving module 30 may scan by using a laser having a wavelength of 1,550 nm.

In addition, there is a feature of being able to scan by centering on a long distance and a short distance, respectively, with differential outputs.

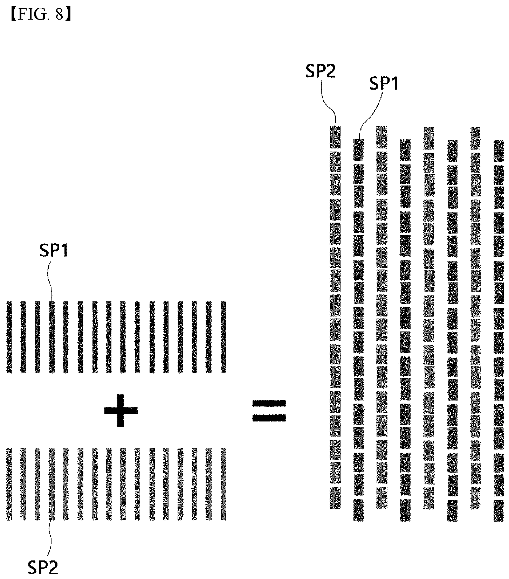

FIG. 8 is an exemplary view showing that the present invention can improve vertical resolution.

The first moving part 60 and the second moving part 70 may linearly move the first light transmitting/receiving module 20 and the second light transmitting/receiving module 30, respectively, and it may be possible to adjust the height.

The heights of the first scan pattern (SP1) and the second scan pattern (SP2) may be different due to the height difference between the first light transmitting/receiving module 20 and the second light transmitting/receiving module 30.

As illustrated in FIG. 8, each scan pattern may have a pixel pattern in a vertical direction, and by arranging such that the pixel pattern of the second scan pattern (SP2) formed by the second light transmitting/receiving module 30 is located between the pixel patterns of the first scan pattern (SP1) formed by the first light transmitting/receiving module 20, it is possible to increase the vertical resolution.

In addition, the present invention may increase the scan range in each direction by adjusting the moving distance or rotation angle of the first light transmitting/receiving module 20 and the second light transmitting/receiving module 30 by using the first moving part 60 and the second moving part 70.

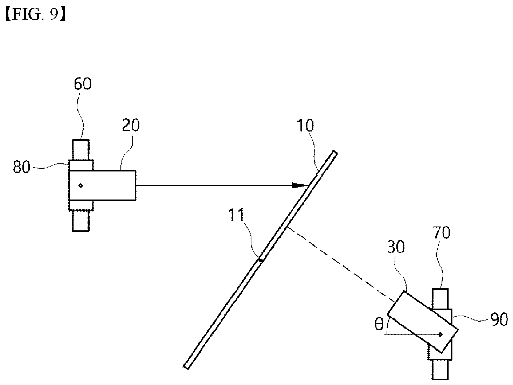

FIG. 9 is a partial block diagram of another example of the present invention.

Referring to FIG. 9, in addition to the configuration described with reference to FIG. 5, it may further include a first angle adjusting unit 80 and a second angle adjusting unit 90 that are capable of adjusting the respective angles of the first light transmitting/receiving module 20 and the second light transmitting/receiving module 30.

The first angle adjusting unit 80 and the second angle adjusting unit 90 adjust the optical axis angles of the laser beams of the first transmitting/receiving module 20 and the second transmitting/receiving module 30 to change the angles of the laser beams incident on the rotating mirror 10, and thus, the scan area may be adjusted to a wider or narrower range.

As such, the present invention may respectively scan the front side and rear side by using one lidar device, and since it may adjust the resolution as needed and may also adjust the scan range as needed, it can be easily applied to various application fields.

Hereinafter, various application examples used in the present invention described above will be described.

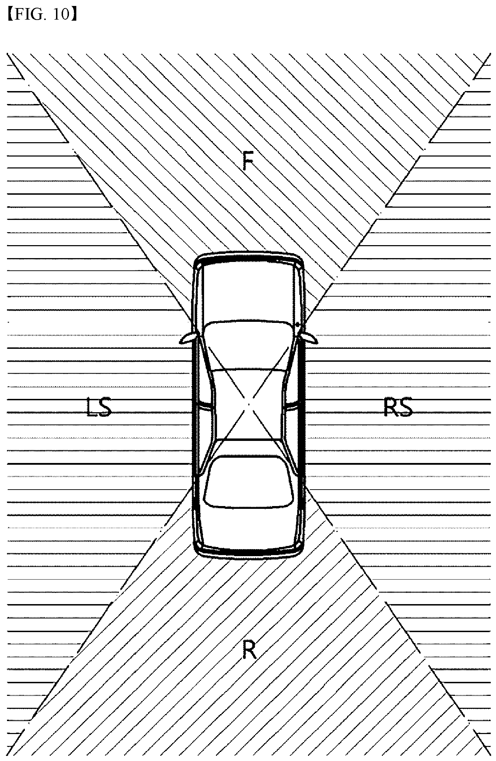

FIG. 10 is an example in which the present invention is applied to a vehicle 1, and by disposing a pair of lidars including one rotating mirror 10 and the first and second light transmitting/receiving modules 20, 30 described above in a mutually orthogonal direction, the front side (F), rear side (R), left side (LS) and right side (RS) of the vehicle 1 may all be scanned by using two lidars.

In such a configuration, since objects including other vehicles or pedestrians may be detected in each direction, the structure may be simplified and the cost may be reduced, when applied to technologies such as autonomous driving and the like.

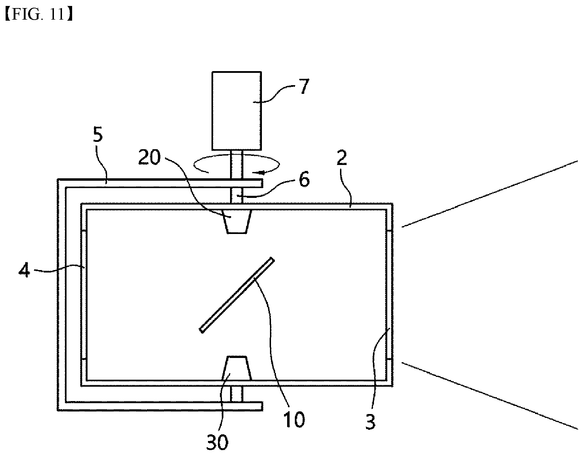

FIG. 11 is a configuration diagram for describing an application example using another feature of the present invention.

As described above, when the lidar including the rotating mirror 10, the first transmitting/receiving module 20 and the second transmitting/receiving module 30 is mounted on a vehicle or the like, it is mounted while being accommodated in a housing 2.

In this case, the signal processing unit 40 and the control unit 50 may be located within the housing 2 or located outside the housing 2.

The housing 2 includes a first window 3 and a second window 4 to emit laser light on two sides facing each other and to receive the reflected light.

For example, the first window 3 may face the front side of the vehicle, and the second window 4 may face the rear side of the vehicle.

As described in detail above, both surfaces of the rotating mirror 10 of the present invention are reflective surfaces, and since it is possible to scan in opposite directions, the housing 2 on which the present invention is mounted is configured by including a first window 3 and a second window 4.

In this case, if necessary, the scan may be maintained in only one direction.

This may be due to the processing of the signal processing unit 40 described above.

As such, even when scanning in only one direction is required, the housing 2 including a first window 3 and a second window 4 may be used in the present invention.

The housing 2 may be rotatably fixed to a rotation stage 5 by the rotating shaft 6, and it may be rotated 180 degrees by a rotation driving unit 7.

That is, the positions of the first window 3 and the second window 4 may be substituted by the rotation driving unit 7. Therefore, in a state where the scan is performed through the first window 3 as illustrated in the drawings by the action of the rotation driving unit 7, the second window 4 may be located in the position of the first window 3 in the drawings according to the driving of the rotation driving unit 7.

In this case, the signal processing unit 40 may perform processing to maintain the original scan direction.

In the case of using a housing having a plurality of windows as described above, when one window (e.g., a first window) is physically contaminated with dirt, leaves, mud and the like, or damaged due to impact or other reasons, it is possible to maintain a normal scan state in the same direction by using another window (e.g., a second window), even if the accurate emission of laser light and the inflow of reflected light become difficult.

Although the exemplary embodiments according to the present invention have been described above, these are only exemplary, and those of ordinary skill in the art will understand that various modifications and equivalent ranges of exemplary embodiments are possible therefrom. Accordingly, the true technical protection scope of the present invention should be defined by the following claims.

**[Explanation of Reference Numerals]**

| | | | |
|---|---|---|---|
| 10: | Rotating mirror | 11: | Rotating shaft |
| 20: | First light transmitting/receiving module | 21, 31: | Light source unit |
| 22, 32: | Receiver | 30: | Second light transmitting/receiving module |
| 40: | Signal processing unit | 50: | Control unit |
| 60: | First moving part | 70: | Second moving part |
| 80: | First rotation part | 90: | Second rotation part |

## Claims

1. A plate mirror scanning lidar with multiple fields of view, comprising:
a plate rotating mirror(10) of which both surfaces are reflective surfaces and rotating about the rotation axis(11) of the center;
a first light transmitting/receiving module(20) and a second light transmitting/receiving module(30) which are located to face each other at positions symmetrical about a rotation axis(11) of the rotating mirror(10) and respectively comprise a light source unit(21, 31) and a receiver(22, 32) to output laser light and receive reflected light; and
a signal processing unit(40) for receiving the scan results of the first light transmitting/receiving module(20) and the second light transmitting/receiving module(30) to process the scan results for each channel in a scan direction.

2. The plate mirror scanning lidar of claim 1, wherein the first light transmitting/receiving module(20) and the second light transmitting/receiving module(30) each have different outputs or different wavelengths.

3. The plate mirror scanning lidar of claim 2, further comprising a control unit(50) for detecting the distance of an object by receiving the scan results for each channel processed by the signal processing unit(40).

4. The plate mirror scanning lidar of claim 3, further comprising:
a first moving part(60) and a second moving part(70) that linearly move the first light transmitting/receiving module(20) and the second light transmitting/receiving module(30) between the channels in a direction parallel to an imaginary straight line centered on the rotation axis(11) under the control of the control unit(50),
wherein horizontal resolution is improved by placing a second scan pattern formed by the second light transmitting/receiving module(30) between first scan patterns formed by the first light transmitting/receiving module(20).

5. The plate mirror scanning lidar of claim 3, further comprising a first moving part(60) and a second moving part(70) that linearly move the first light transmitting/receiving module(20) and the second light transmitting/receiving module(30) between the channels in a direction parallel to an imaginary straight line centered on the rotation axis(11) under the control of the control unit(50),
wherein horizontal resolution and vertical resolution are improved by placing a second scan pattern formed by the second light transmitting/receiving module(30) between first scan patterns formed by the first light transmitting/receiving module(20), and also by differentiating the height of the first scan pattern and the height of the second scan pattern.

6. The plate mirror scanning lidar of claim 4, further comprising a first rotation part(80) and a second rotation part(90) for changing the optical axis directions of the first light transmitting/receiving module(20) and the second light transmitting/receiving module(30) moved by the first moving part(60) and the second moving part(70), respectively, to adjust the scan range.

7. The plate mirror scanning lidar of claim 3, wherein the channel consists of a first channel and a second channel,
wherein a first scan pattern formed by the first light transmitting/receiving module(20) and a second scan pattern formed by the second light transmitting/receiving module(30) are alternately repeated continuously in the first channel, and
wherein the second scan pattern and the first scan pattern are alternately repeated continuously in the second channel.

8. The plate mirror scanning lidar of claim 3, wherein the control unit(50) controls the operational timing of the first light transmitting/receiving module(20) and the second transmitting/receiving module(30) such that a second scan pattern formed by the second light transmitting/receiving module(30) is located between first scan patterns formed by the first light transmitting/receiving module(20).

9. The plate mirror scanning lidar of claim 1, further comprising:
a housing(2) for accommodating the rotating mirror(10), the first light transmitting/receiving module(20) and the second light transmitting/receiving module(30);
a first window(3) and a second window(4) respectively located on opposite surfaces of the housing(2) and emitting laser light reflected from the rotating mirror(10) to the outside;
a rotation stage(5) for rotatably fixing the housing(2); and
a rotation driving unit(7) which is capable of replacing the positions of the first window(3) and the second window(4) with each other, by rotating the housing(2) fixed to the rotation stage(5).
